# EUROPEAN PATENT APPLICATION

(11) **EP 4 614 526 A1**
(43) Date of publication of application: **10.09.2025**
(21) Application number: 23885655.3
(22) Date of filing: 26.10.2023
(51) Int. Cl.: H01B 5/14, H01B 13/00, H05K 9/00, B32B 7/025

(54) **SUBSTRATE WITH CONDUCTIVE FILM, AND METHOD FOR MANUFACTURING SAME**

(30) Priority: 31.10.2022 JP 2022175050
(71) Applicant: AGC INC., Chiyoda-ku, Tokyo 1008405 (JP)
(72) Inventor: NAKANISHI, Takenori, Tokyo 100-8405 (JP); KAWAKAMI, Remi, Tokyo 100-8405 (JP)
(74) Representative: Müller-Boré & Partner Patentanwälte PartG mbB
(86) International application number: PCT/JP2023/038793
(87) International publication number: WO 2024/095899

(57) **Abstract**

The present invention relates to a substrate provided with a conductive film comprising a substrate, and a conductive film formed on at least one main surface of the substrate, wherein the conductive film includes a conductive layer, the conductive film is separated by slitted parts, and the conductive layer is continuously covered by an oxide film in the end parts of the conductive film separated by the slitted parts.

## Description

### TECHNICAL FIELD

The present invention relates to a conductive film-attached substrate and a method for producing the same.

### BACKGROUND ART

In recent years, fifth generation wireless systems (5G) have become widespread, and many electronic devices have been mounted in automobiles and the like. However, in the case where these electronic devices are used, malfunction of the electronic device is likely to occur due to radio wave interference or the like. As a method of preventing the radio wave interference, it is conceivable to use an electromagnetic wave control member.

Examples of the electromagnetic wave control member include a radio wave absorber such as a λ/4 radio wave absorber, and a frequency selective surface provided with a patterned conductive film on a substrate (Patent Literature 1).

### CITATION LIST

### PATENT LITERATURE

Patent Literature 1: JP2016-534975A

### SUMMARY OF INVENTION

### TECHNICAL PROBLEM

In a conductive film-attached substrate in which a pattern is formed on the conductive film by laser irradiation, etching, or the like, ion migration occurs between the conductive films separated by the pattern. When the ion migration proceeds, a metal is eluted from the conductive film and deposited in a dendritic shape to form a resin crystal (dendrite), so that the conductive films are short-circuited. Therefore, in general, in order to block electrical connection between the conductive films, it is necessary to provide an insulating film made of a resin or the like on the conductive film for passivation. However, it is desirable not to provide the insulating film from the viewpoint of reducing a production cost and improving productivity.

Therefore, an object of the present invention is to provide a conductive film-attached substrate that exhibits excellent insulation reliability between conductive films without providing an insulating film.

### SOLUTION TO PROBLEM

As a result of intensive studies, the inventors of the present invention have found that the above problems can be solved by forming an oxide film that continuously covers a conductive film at an end portion of the conductive film separated by a slit portion, and have completed the present invention.

That is, the present invention has the following configurations.
[1] A conductive film-attached substrate including:
   a substrate; and
   a conductive film formed on at least one main surface of the substrate, in which
   the conductive film includes a conductive layer,
   the conductive film is separated by a slit portion, and
   the conductive layer is continuously covered with an oxide film at an end portion of the conductive film separated by the slit portion.
[2] The conductive film-attached substrate according to [1], in which the conductive film includes a protective layer.
[3] The conductive film-attached substrate according to [1], in which an average height of the oxide film is twice or more a thickness of the conductive film.
[4] The conductive film-attached substrate according to [1], in which the conductive layer contains silver.
[5] The conductive film-attached substrate according to [1], in which the substrate is a glass.
[6] The conductive film-attached substrate according to [1], in which the substrate is a resin.
[7] A method for producing a conductive film-attached substrate, the method including:
   irradiating a conductive film including a conductive layer formed on a surface of a substrate with a laser to remove a part of the conductive film such that the conductive film is separated by a slit portion and an oxide film continuously covering the conductive layer is formed at an end portion of the conductive film separated by the slit portion.
[8] The production method according to [7], in which a pulse width of the laser is on an order of picoseconds or nanoseconds.
[9] The production method according to [7] or [8], in which a wavelength of the laser is 500 nm to 1500 nm.
[10] An electromagnetic wave control member including:
   the conductive film-attached substrate according to any one of [1] to [6].
[11] A radio wave absorber member including:
   the conductive film-attached substrate according to any one of [1] to [6].
[12] A frequency selective surface including:
   the conductive film-attached substrate according to any one of [1] to [6].

### ADVANTAGEOUS EFFECTS OF INVENTION

According to the present invention, it is possible to provide a conductive film-attached substrate that exhibits excellent insulation reliability between conductive films without providing an insulating film.

### BRIEF DESCRIPTION OF DRAWINGS

[FIG. 1] FIG. 1 is a diagram showing a conductive film-attached substrate according to one embodiment of the present invention. (A) of FIG. 1 is a top view of the conductive film-attached substrate, and (B) of FIG. 1 is an enlarged view of a cross section taken along a line X-X in a portion surrounded by a dotted line in the top view shown in (A).
[FIG. 2] FIG. 2 is a partial cross-sectional view of the conductive film-attached substrate according to the embodiment.
[FIG. 3] FIG. 3 is a scanning electron microscope image showing a shape of an oxide film in a conductive film-attached substrate obtained in Example 1.
[FIG. 4] FIG. 4 is a diagram showing a height of the oxide film in the conductive film-attached substrate obtained in Example 1.
[FIG. 5] FIG. 5 is a diagram showing a height of an oxide film in a conductive film-attached substrate obtained in Example 2.
[FIG. 6] FIG. 6 is an optical microscope image of the conductive film-attached substrate obtained in Example 1 after a voltage application test.
[FIG. 7] FIG. 7 is an optical microscope image of the conductive film-attached substrate obtained in Example 2 after a voltage application test.

### DESCRIPTION OF EMBODIMENTS

Hereinafter, embodiments of the present invention are described in detail, but the present invention is not limited to the following embodiments and can be freely modified and implemented without departing from the gist of the present invention.

In addition, "to" indicating a numerical range is used in a meaning including numerical values described before and after thereof as a lower limit value and an upper limit value.

In the following drawings, members and portions that exhibit the same effect may be described with the same reference numerals, and redundant description may be omitted or simplified. The embodiments described in the drawings are schematically illustrated to clearly describe the present invention, and do not necessarily accurately represent actual sizes and scales of products.

### <<Conductive Film-attached Substrate>>

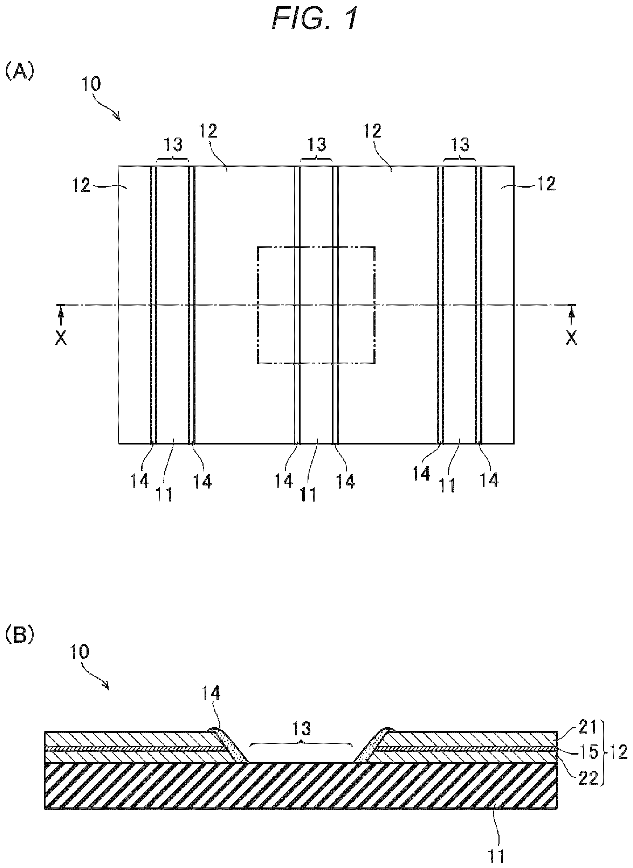

FIG. 1 is a diagram showing a conductive film-attached substrate according to one embodiment of the present invention. (A) of FIG. 1 is a top view of the conductive film-attached substrate, and (B) of FIG. 1 is an enlarged view of a cross section taken along a line X-X in a portion surrounded by a dotted line in the top view shown in (A).

As shown in FIG. 1, a conductive film-attached substrate 10 according to the present embodiment is a conductive film-attached substrate 10 including a substrate 11 and a conductive film 12 formed on at least one main surface of the substrate 11, in which the conductive film 12 includes a conductive layer 15, the conductive film 12 is separated by a slit portion 13, and the conductive layer 15 is continuously covered with an oxide film 14 at an end portion of the conductive film 12 separated by the slit portion 13.

More specifically, as shown in (A) of FIG. 1, the oxide film 14 is continuously formed to cover the conductive layer 15 at the end portion of the conductive film 12 separated by the slit portion 13 (a portion of the conductive film 12 separated by sandwiching the slit portion 13). Note that, in FIG. 1, three slit portions arranged in parallel are formed, but this is merely an example, and the number of slit portions and formation conditions of the slit portions such as a pattern can be appropriately changed.

As shown in (B) of FIG. 1, in the present embodiment, the conductive film 12 has a structure in which the conductive layer 15 is sandwiched between a protective layer 21 and a protective layer 22. However, as to be described in detail later, such a structure is merely an example, and it is sufficient that the conductive film 12 includes the conductive layer 15.

### <Substrate>

The substrate is not particularly limited in material, and may be, for example, a transparent substrate formed of a transparent material. Examples of the transparent substrate include a glass substrate and a resin-made substrate (resin substrate). Note that, in the present description, "transparent" means, for example, that a visible light transmittance is 70% or more.

As the glass substrate, for example, a glass substrate such as a soda lime glass, an alkali-free glass, or a quartz glass can be used. The glass substrate may be subjected to a physical strengthening treatment or a chemical strengthening treatment. **In** addition, the glass substrate may be formed of one glass, or may be formed by laminating a plurality of glasses with a resin-made film (resin film) or the like interposed therebetween.

Examples of the resin substrate include substrates made of acrylic resins such as polymethyl methacrylate, aromatic polycarbonate-based resins such as polyphenylene carbonate, and aromatic polyester-based resins such as polyethylene terephthalate (PET).

The substrate is not necessarily formed of a single member, and may be, for example, a composite substrate in which a resin substrate and a glass substrate are laminated.

A shape of the substrate is preferably a flat plate shape in order to easily form a uniform conductive film and to perform laser processing with a fixed focal point. A thickness and a size of the substrate are not particularly limited, and can be appropriately adjusted according to the desired strength, lightness, and the like. For example, the thickness of the substrate may be 0.05 mm or more, 0.1 mm or more, 1.0 mm or more, or 3.0 mm or more. **In** addition, the thickness of the substrate may be 20.0 mm or less, 12.0 mm or less, 10.0 mm or less, 5.0 mm or less, or 4.0 mm or less.

**In the** case where a glass substrate is used as the substrate in the present embodiment, a specific gravity of the glass substrate is preferably 2.4 or more and 3.0 or less. A Young's modulus of the glass substrate is preferably 60 GPa or more and 100 GPa or less. An average thermal expansion coefficient of the glass substrate from 50°C to 350°C is preferably 50 × 10⁻⁷/°C or more and 120 × 10⁻⁷/°C or less. When the glass substrate satisfies these physical property requirements, it can be sufficiently suitably used as a window material.

### <Conductive Film>

The conductive film is a film having conductivity. **In** the present description, "having conductivity" means that, for example, electrical resistivity at 20°C is 100 Ω/□ or less.

A thickness of the conductive film is preferably 5 nm or more, more preferably 10 nm or more, still more preferably 15 nm or more, even more preferably 50 nm or more, particularly preferably 80 nm or more, and extremely preferably 100 nm or more, from the viewpoint of durability and performance of the conductive film. **In** addition, the thickness is preferably 1500 nm or less, more preferably 1200 nm or less, still more preferably 1000 nm or less, even more preferably 500 nm or less, particularly preferably 450 nm or less, and extremely preferably 400 nm or less, from the viewpoint of stably forming the slit portion and the viewpoint of productivity.

Hereinafter, the configuration of the conductive film in the present embodiment is described in detail. The conductive film in the present embodiment includes at least a conductive layer.

### (Conductive Layer)

The conductive layer is not particularly limited in component, and preferably contains, for example, a metal such as silver, aluminum, tin oxide doped with at least one of fluorine and antimony (SnO₂: F, Sb), indium tin oxide (ITO), titanium nitride, niobium nitride, chromium nitride, zirconium nitride, and hafnium nitride. Among these, in order for the conductive film-attached substrate to exhibit excellent conductivity and a low emissivity, the conductive layer preferably contains silver, more preferably contains silver as a main component, and still more preferably contains 95 atom% or more of silver. Note that, in the present description, the main component means that a content with respect to all constituent components is 50 atom% or more.

The conductive layer containing silver as a main component may contain one or more additive elements such as gold, palladium, copper, bismuth, neodymium, and platinum. By containing such an additive element in the conductive layer containing silver as a main component, diffusion of silver can be prevented and moisture resistance can be improved. Note that, the additive element is not limited to those exemplified above, and any element can be added as long as the effect of the present invention is exhibited.

A sheet resistance value of the conductive layer may be 0.01 Ω/□ or more, 0.1 Ω/□ or more, or 1 Ω/□ or more. **In** addition, the resistance value of the conductive layer is preferably 100 Ω/□ or less, more preferably 50 Ω/□ or less, and still more preferably 20 Ω/□ or less, from the viewpoint of ensuring performance as an electromagnetic wave control member. The sheet resistance value can be measured by using, for example, a four-terminal measuring device, and can also be measured by using a Hall effect measuring device or a non-contact resistance measuring device using an eddy current method.

A vertical emissivity εn of the conductive layer is preferably 0.1 or less. When the vertical emissivity εn of the conductive layer is 0.1 or less, the conductive layer has excellent heat insulating properties and heat shielding properties, so that the substrate can be effectively prevented from being damaged even in the event of a fire. The vertical emissivity εn can be measured by using a method specified in JIS R3106 (2019).

A thickness of the conductive layer is preferably 0.1 nm or more, more preferably 1 nm or more, and still more preferably 5 nm or more, from the viewpoint of ensuring the performance as an electromagnetic wave control member, although it depends on whether a protective layer to be described later is provided or the like. **In** addition, the thickness is preferably 100 nm or less, more preferably 50 nm or less, and still more preferably 20 nm or less from the viewpoint of the productivity and the viewpoint of maintaining visible light transmissibility.

### (Protective Layer)

**In** the present embodiment, the conductive film preferably includes a protective layer in addition to the conductive layer. That is, the conductive film is preferably a laminate in which a plurality of layers are laminated.

**In** the case where the conductive film is a laminate, it is preferable that the configuration is conductive layer/protective layer or protective layer/conductive layer/protective layer, or these layers are alternately laminated a plurality of times from a substrate side. By disposing the protective layer adjacent to the conductive layer, oxidation of the metal in the conductive layer in a high-temperature environment can be prevented. **In** addition, by disposing the protective layer as the outermost layer, the conductive layer can be prevented from coming into contact with oxygen or moisture in the air, deterioration of the conductive film can be prevented, the conductive layer is not exposed to the surface, and the insulation reliability can be further improved. Further, by disposing the protective layer between the substrate and the conductive layer, bonding strength of the conductive layer to the substrate can be improved.

Note that, in the case where the protective layer is formed as the outermost layer, the protective layer may be provided as the entire surface or may be provided as only a part of the surface.

The number of layers constituting the conductive film is not particularly limited, and may be, for example, one layer, two layers, or three layers. **In** the case where the conductive film is a laminate in which a plurality of layers are laminated, another film to be described later may be interposed between the layers.

Examples of a material of the protective layer include a metal oxide and a metal. Specific examples of the metal oxide include zinc oxide, aluminum oxide, tin oxide, and titanium oxide. Examples of the metal include titanium and a Zn alloy. **In** addition, the material constituting the protective layer may be only one type or may be two or more types, and in the case where the conductive film includes a plurality of protective layers, the materials of the layers may be different from each other.

**In** the case where the conductive film includes a protective layer, a thickness of the protective layer is not particularly limited, and may be, for example, 0.5 nm to 100 nm or 1 nm to 50 nm.

A method of forming the conductive layer and the protective layer is not particularly limited, and for example, a physical vapor deposition method (such as a vacuum vapor deposition method, an ion plating method, and a magnetron sputtering method), a chemical vapor deposition method (such as a thermal CVD method, a plasma CVD method, and an optical CVD method), or an ion beam sputtering method can be used. **In** the case where a film formation area is large, a DC magnetron sputtering method, a DC pulse magnetron sputtering method, or an AC dual magnetron sputtering method is preferred since uniformity of the thickness is easily controlled and the productivity is excellent.

The conductive layer and the protective layer may be formed directly or indirectly on the substrate. The indirect formation method is not particularly limited, and examples thereof include a method of attaching a conductive layer or a protective layer formed on a resin film to a substrate and then peeling off the resin film.

The conductive film-attached substrate according to the present embodiment may include a film (another film) different from the conductive film as long as the effect of the present invention is exhibited.

### <Slit Portion>

In the conductive film-attached substrate according to the present embodiment, the conductive film is typically separated by a predetermined slit portion formed by removing a part of the conductive film using laser irradiation or the like. In the present embodiment, as the slit portion, for example, a form in which the entire conductive film is removed and the substrate is the outermost surface is exemplified. However, in the present embodiment, for example, a form in which at least one film (another film) other than the conductive film is included may be exemplified. Further, when there is no conduction between conductive films defining the slit portion, a part of the conductive film may remain.

In general, in the conductive film-attached substrate in which a part of the conductive film is removed, since the conductive layer included in the conductive film is exposed at the end portion of the slit portion, when a voltage is applied to the conductive film-attached substrate, the metal contained in the conductive layer causes ion migration to form a dendrite. Since growth of the dendrite causes a short circuit, after the slit portion is formed, an insulating film made of a resin or the like is generally provided on the surface of the conductive film for passivation.

The inventors of the present invention have found that, as shown in FIG. 1, by forming the oxide film 14 to continuously cover the conductive layer 15 at the end portion of the conductive film 12 separated by the slit portion 13 (the end portion of the slit portion), the ion migration is prevented, and accordingly, the conductive film-attached substrate 10 having excellent insulation reliability can be obtained without providing an insulating film which has been essential in the related art. Note that, in the present description, "the oxide film continuously covers the conductive layer" means that the oxide film is formed at the end portion of the slit portion, that is, an end surface of the conductive film, and the conductive layer is not exposed, and for example, as shown in (B) of FIG. 1, the oxide film may be formed to be connected from the surface of the substrate to the surface of the conductive film along the end surface of the conductive film at the end portion of the slit portion.

The oxide film can be formed, for example, by forming the slit portion while applying heat using a laser. Specifically, for example, a method of forming a slit portion using a laser having a pulse width on the order of picoseconds or nanoseconds may be used.

In the present embodiment, an average height of the oxide film is preferably twice or more the thickness of the conductive film. When the average height of the oxide film is twice or more the thickness of the conductive film, electrical connection between the conductive films can be prevented for a long period of time, and excellent insulating properties can be maintained. The average height of the oxide film is more preferably 2.5 times or more, still more preferably 3 times or more, and particularly preferably 5 times or more the thickness of the conductive film. The upper limit of the average height of the oxide film is preferably 15 times or less, and more preferably 10 times or less the thickness of the conductive film from the viewpoint of ensuring the performance as an electromagnetic wave control member.

Here, the height of the oxide film means a distance in a vertical direction from a bottom surface to the surface of the oxide film when the main surface on the surface side (the side opposite to the substrate side) of the conductive film is the bottom surface.

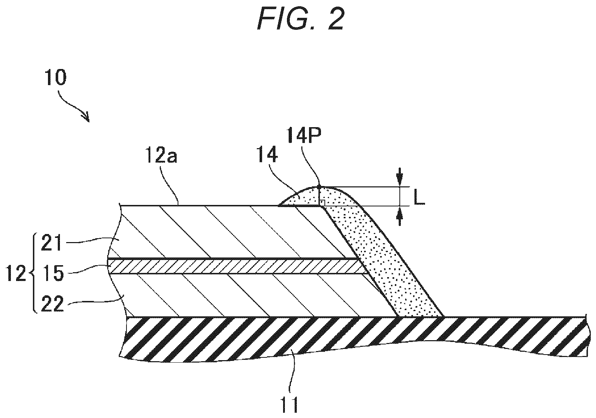

Hereinafter, the height of the oxide film is described more specifically with reference to FIG. 2. FIG. 2 is a partial cross-sectional view of the conductive film-attached substrate 10 according to the embodiment, and the conductive film 12 having a structure in which the protective layer 22, the conductive layer 15, and the protective layer 21 are laminated in this order is formed on one surface of the substrate 11. The end portion of the conductive film 12 is covered with the oxide film 14 continuously formed to the substrate 11 from a main surface 12a of the conductive film 12 opposite to the substrate 11. In a cross-sectional view in a thickness direction of the conductive film-attached substrate 10 (the cross-sectional view shown in FIG. 2), the highest point of the oxide film 14 is defined as a point 14P. The height of the oxide film 14 in this case is a length L of a perpendicular line drawn from the point 14P to the main surface 12a of the conductive film 12 opposite to the substrate 11. Note that, in the case where the main surface 12a of the conductive film 12 is not present immediately below a point P, a surface obtained by extending the main surface 12a in a surface spreading direction is defined, and the length L of a perpendicular line drawn from the point 14P to this surface is defined as the height of the oxide film 14.

The average height of the oxide film is the height of the oxide film measured at any three or more positions, and can be measured by using, for example, stylus type surface shape measurement.

The average height of the oxide film is preferably 400 nm or more, more preferably 500 nm or more, and still more preferably 600 nm or more, from the viewpoint that electrical connection between the conductive films can be prevented for a long period of time and excellent insulating properties can be maintained. The upper limit of the average height of the oxide film is preferably 1500 nm or less, and more preferably 1400 nm or less, from the viewpoint of ensuring an aesthetic appearance.

### <Method for Producing Conductive Film-attached Substrate>

A method for producing a conductive film-attached substrate according to the present embodiment includes: irradiating a conductive film including a conductive layer formed on a surface of a substrate with a laser to remove a part of the conductive film such that the conductive film is separated by a slit portion and an oxide film continuously covering the conductive layer is formed at an end portion of the conductive film separated by the slit portion.

Here, the substrate having the conductive film formed on the surface thereof can be prepared, for example, by forming the conductive film on one main surface of the substrate by using a sputtering method, a CVD method, or the like. In addition, the conductive film preferably contains silver as described above.

Next, the conductive film formed on the surface of the substrate is irradiated with a laser to remove the conductive film, thereby forming a slit portion. At the same time, an oxide film continuously covering the conductive layer is formed at an end portion of the conductive film separated by the slit portion.

The type of the laser is not particularly limited, and a solid-state laser or a gas laser is preferably used since a high output suitable for processing can be obtained. Examples of the solid-state laser include a YAG laser, and examples of the gas laser include an Ar ion laser.

The oxide film is formed by applying heat from a laser to the conductive film to oxidize a material of the conductive layer, to form the end portion of the conductive layer. Note that, in the case where the conductive film includes a protective layer, the oxide film is formed by combining the material of the conductive layer with an oxidized material of the protective layer and losing the laminated structure. Therefore, it is preferable to perform laser irradiation using a laser having a pulse width on the order of picoseconds or nanoseconds. In general, the smaller the pulse width, the smaller the influence of the heat from the laser on an object, and the larger the pulse width, the larger the influence of the heat. When a laser having a large pulse width (for example, on the order of picoseconds or more) is used, an oxide film is likely to be formed at the end portion of the slit portion simultaneously with the removal of the conductive film, and ion migration can be prevented in the finally obtained conductive film-attached substrate.

Specifically, the pulse width of the laser is preferably 1 ps or more, more preferably 10 ps or more, still more preferably 100 ps or more, even more preferably 1 ns or more, particularly preferably 10 ns or more, and most preferably 20 ns or more. In order to prevent the influence of the heat from the laser on the substrate, the pulse width is preferably 1 µs or less, more preferably 500 ns or less, and still more preferably 100 ns or less.

A wavelength of the laser is preferably 500 nm to 1500 nm. When the wavelength of the laser is 500 nm or more, the oxide film can be formed by applying the heat from the laser to the conductive film. The wavelength of the laser is more preferably 600 nm or more, and still more preferably 700 nm or more. When the wavelength of the laser is 1500 nm or less, the influence of the laser on the substrate can be prevented. The wavelength of the laser is more preferably 1400 nm or less, and still more preferably 1300 nm or less.

A scanning speed of the laser may be, for example, 10 mm/sec to 1000 mm/sec or 100 mm/sec to 500 mm/sec.

A magnitude of an energy of the laser can be adjusted based on an output of the laser. Specifically, the output of the laser is preferably 0.1 W or more, and more preferably 1 W or more. The output of the laser is preferably 100 W or less, more preferably less than 100 W, and still more preferably 50 W or less.

A shape of the slit portion formed in the conductive film can be appropriately set, and for example, a predetermined shape such as a linear shape, a zigzag shape, a lattice shape, a honeycomb shape, or a circular shape can be selected.

**In** other laser irradiation conditions, processing conditions (for example, focus conditions or frequency) of laser light can be appropriately set in consideration of a balance among the thickness of the substrate, a width of the slit portion, humidity, and the like.

### <Application>

Since the conductive film-attached substrate according to the present embodiment has selective radio wave transmissibility and a phase adjustment effect, it can be suitably used in an electromagnetic wave control member. Examples of the electromagnetic wave control member include a radio wave absorber member such as a λ/4 radio wave absorber, and a frequency selective surface (FSS). **In** addition, a radio wave absorber thinner than the λ/4 radio wave absorber can be implemented by introducing a frequency selective surface (FSS) into a conductive layer of the λ/4 radio wave absorber. By forming the slit portion of the conductive film-attached substrate according to the present embodiment in any shape, the radio wave can be controlled to have a specific desired frequency.

Such an electromagnetic wave control member can be used in a place where a human body, a communication device, a sensor, or the like is protected from electromagnetic waves, or a place where communication failure or malfunction countermeasures are required. For example, in the case where a box-shaped radio wave absorber is used as a self-register or a warehouse and a product is automatically recognized inside the radio wave absorber, unnecessary radio waves are prevented by the radio wave absorber, and thus it is possible to prevent erroneous counting of products. The electromagnetic wave control member may be required to have visibility. Therefore, the visible light transmittance of the conductive film-attached substrate is preferably 50% or more, more preferably 53% or more, and still more preferably 55% or more. The visible light transmittance is preferably 90% or less, and more preferably 80% or less. When the visible light transmittance is 50% or more, those present can be visually recognized through the conductive film-attached substrate. The visible light transmittance is measured in accordance with Japanese Industrial Standards JIS R 3106:1998, and is calculated according to a calculation formula in the case of using a standard D65 light source.

### Examples

Hereinafter, the present invention is specifically described with reference to Examples, but the present invention is not limited thereto. Note that, Example 1 is an inventive example, and Example 2 is a comparative example.

### [Production of Conductive Film-attached Substrate]

### (Example 1)

A glass substrate (FL3 manufactured by AGC Inc.) having a thickness of 3 mm was prepared as a substrate, and a conductive film having a total thickness of 191 nm and including a conductive layer containing silver (Ag) as a main component and a protective layer containing zinc oxide (ZnO) as a main component was formed on one main surface of the substrate by using a sputtering method, so as to obtain a conductive film-attached substrate.

More specifically, a soda lime glass (FL3, manufactured by AGC Inc.) having a thickness of 3 mm was prepared as a substrate, and a protective layer (thickness: 45 nm) containing ZnO as a main component, a conductive layer (thickness: 13 nm) containing Ag as a main component, a protective layer (thickness: 90 nm) containing ZnO as a main component, a conductive layer (thickness: 13 nm) containing Ag as a main component, and a protective layer (thickness: 30 nm) containing ZnO as a main component were formed in this order as a conductive film on one main surface of the substrate by using a sputtering method, so as to obtain a glass with a conductive film.

Here, the sheet resistance value of the conductive layer was 1.8 Ω/□.

Next, the surface of the conductive film-attached substrate on which the conductive film was provided was irradiated with a nanosecond laser (model number MD-X1520, manufactured by KEYENCE CORPORATION) under the following conditions to remove a part of the conductive film.

### (Laser Conditions)

Scanning was linearly performed using laser at a laser light wavelength of 1064 nm, a pulse width of several tens of ns, a laser scanning speed of 300 mm/s, and a laser frequency of 30 kHz.

### (Example 2)

A conductive film-attached substrate was prepared by a procedure same as that in Example 1 except that a femtosecond laser (model number PHAROS-15, manufactured by Light Conversion Co., Ltd.) was used, the laser light wavelength was 1064 nm, the pulse width was 237 fs, the scanning speed of the laser was 500 mm/s, and the frequency of the laser was 100 kHz.

### <Observation of Oxide Film>

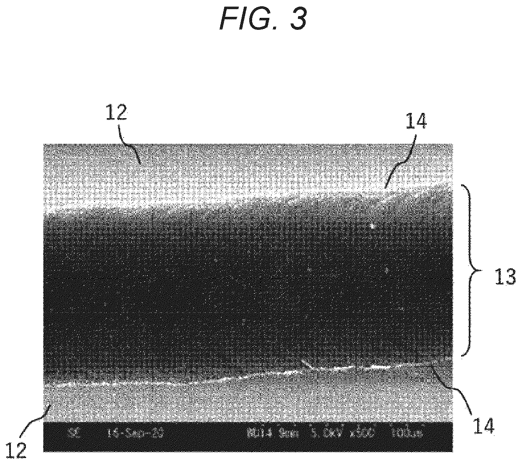

With respect to the conductive film-attached substrate in Example 1 obtained above, the presence or absence and the shape of the oxide film around the slit portion were observed using a scanning electron microscope (SEM) (model number S-4300, manufactured by Hitachi, Ltd.). The results of observing the surface of the conductive film-attached substrate in Example 1 at an acceleration voltage of 5.0 kV are shown in FIG. 3.

In FIG. 3, a white line corresponds to the oxide film 14, a central portion surrounded by the white line corresponds to the slit portion 13, and upper and lower portions outside the white line correspond to the conductive film 12. In Example 1, it has been observed that the oxide film 14 is continuously formed in a long side direction of the slit portion 13 at the end portion of the slit portion 13.

In addition, in Example 2, the presence or absence of the oxide film around the slit portion was observed by a procedure same as that in Example 1. However, in Example 2, it has been observed that the oxide film is not continuously formed and was formed only in a part.

### <Average Height of Oxide Film>

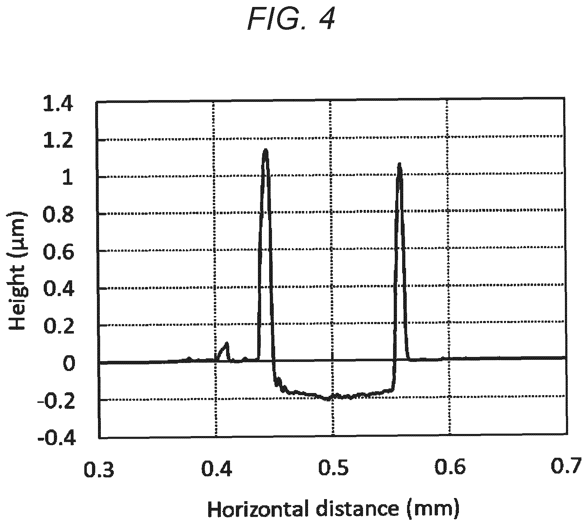

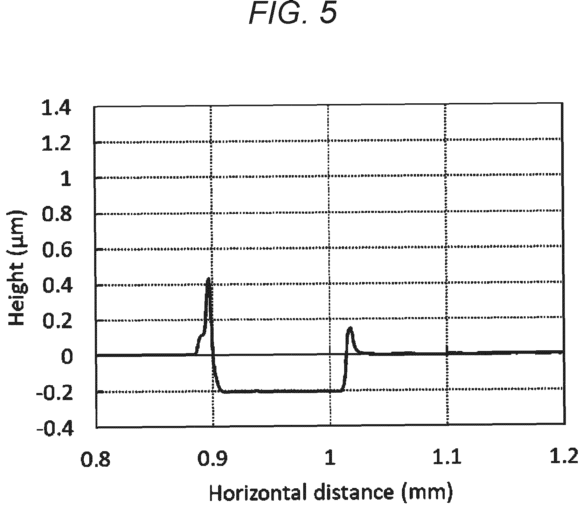

With respect to the conductive film-attached substrate obtained as described above, the height of the oxide film was measured under the following conditions in arbitrary region including the conductive film/slit portion/conductive film with a measurement length of 1 mm using a stylus type surface shape measurement (Dektak, manufactured by Bruker). In addition, the heights of the oxide film at arbitrary three positions were measured by the same procedure, and the average value thereof was defined as the average height of the oxide film. The results for Example 1 and Example 2 are shown in Table 1, FIG. 4 and FIG. 5.

### (Measurement Conditions)

Cutoff value λc: 0.8 mm, cutoff ratio λc/λs: 32, measurement speed: 0.1 mm/sec.

**Table 1**

| | | Example 1 | Example 2 |
|---|---|---|---|
| Laser conditions | Pulse width | Several tens of ns | 237 fs |
| | Wavelength | 1064 nm | 1064 nm |
| Average height of oxide film | | 932 nm | 258 nm |

### <Voltage Application Test>

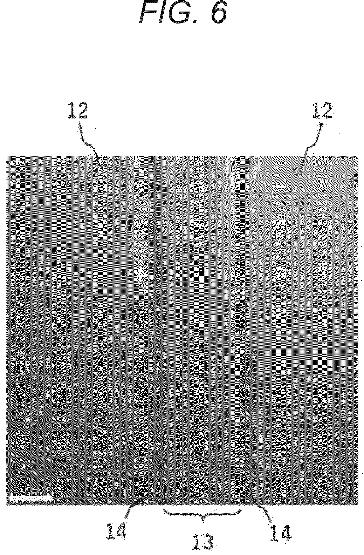

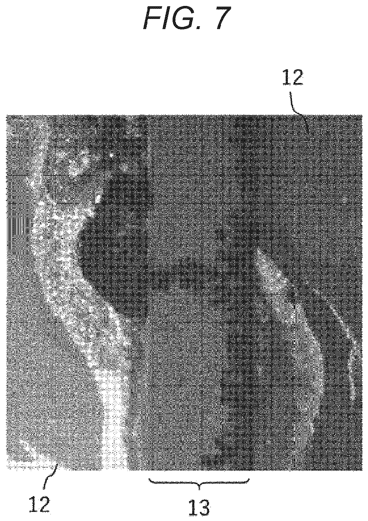

A voltage of 5 V was applied to the conductive film-attached substrate obtained above for 60 minutes under conditions of 25°C and pure water dropping, and then the surface on the side where the conductive film was provided was observed with an optical microscope. Surface images of Example 1 and Example 2 observed with an optical microscope are shown in FIG. 6 and FIG. 7.

As seen from the results in FIG. 6 and FIG. 7, in Example 1 which is an inventive example, no formation of the dendrite is observed even after the voltage application test, and excellent insulating properties between the conductive films is exhibited owing to the formation of the oxide film. On the other hand, in Example 2 which is a comparative example, the oxide film is not continuously formed but is formed only on a part. In addition, the height of the formed oxide film is low, and the oxide film is thin. Therefore, the insulating properties are insufficient, and dendrites are formed by the voltage application test. Note that, the average height of the oxide film in Example 2 is measured in the region where the oxide film is formed.

As described above, the following configuration is disclosed in the present description.
[1] A conductive film-attached substrate including:
   a substrate; and
   a conductive film formed on at least one main surface of the substrate, in which
   the conductive film includes a conductive layer,
   the conductive film is separated by a slit portion, and
   the conductive layer is continuously covered with an oxide film at an end portion of the conductive film separated by the slit portion.
[2] The conductive film-attached substrate according to [1], in which the conductive film includes a protective layer.
[3] The conductive film-attached substrate according to [1] or [2], in which an average height of the oxide film is twice or more a thickness of the conductive film.
[4] The conductive film-attached substrate according to any one of [1] to [3], in which the conductive layer contains silver.
[5] The conductive film-attached substrate according to any one of [1] to [4], in which the substrate is a glass.
[6] The conductive film-attached substrate according to any one of [1] to [5], in which the substrate is a resin.
[7] A method for producing a conductive film-attached substrate, the method including:
   irradiating a conductive film including a conductive layer formed on a surface of a substrate with a laser to remove a part of the conductive film such that the conductive film is separated by a slit portion and an oxide film continuously covering the conductive layer is formed at an end portion of the conductive film separated by the slit portion.
[8] The production method according to [7], in which a pulse width of the laser is on an order of picoseconds or nanoseconds.
[9] The production method according to [7] or [8], in which a wavelength of the laser is 500 nm to 1500 nm.
[10] An electromagnetic wave control member including:
   the conductive film-attached substrate according to any one of [1] to [6].
[11] A radio wave absorber member including:
   the conductive film-attached substrate according to any one of [1] to [6].
[12] A frequency selective surface including:
   the conductive film-attached substrate according to any one of [1] to [6].

Although various embodiments have been described above, the present invention is not limited to these examples. It is apparent to those skilled in the art that various variations or modifications can be conceived within the scope described in the claims, and it should be naturally understood that those belong to the technical scope of the present invention. In addition, the components described in the above embodiments may be combined freely without departing from the spirit of the invention.

Note that, the present application is based on a Japanese patent application (Japanese Patent Application No. 2022-175050) filed on October 31, 2022, and the contents thereof are incorporated herein by reference.

### REFERENCE SIGNS LIST

10 conductive film-attached substrate
11 substrate
12 conductive film
13 slit portion
14 oxide film
15 conductive layer
21, 22 protective layer

## Claims

1. A conductive film-attached substrate comprising:
a substrate; and
a conductive film formed on at least one main surface of the substrate, wherein
the conductive film includes a conductive layer,
the conductive film is separated by a slit portion, and
the conductive layer is continuously covered with an oxide film at an end portion of the conductive film separated by the slit portion.

2. The conductive film-attached substrate according to claim **1,** wherein the conductive film includes a protective layer.

3. The conductive film-attached substrate according to claim **1,** wherein an average height of the oxide film is twice or more a thickness of the conductive film.

4. The conductive film-attached substrate according to claim 1, wherein the conductive layer contains silver.

5. The conductive film-attached substrate according to claim 1, wherein the substrate is a glass.

6. The conductive film-attached substrate according to claim 1, wherein the substrate is a resin.

7. A method for producing a conductive film-attached substrate, the method comprising:
irradiating a conductive film including a conductive layer formed on a surface of a substrate with a laser to remove a part of the conductive film such that the conductive film is separated by a slit portion and an oxide film continuously covering the conductive layer is formed at an end portion of the conductive film separated by the slit portion.

8. The production method according to claim 7, wherein a pulse width of the laser is on an order of picoseconds or nanoseconds.

9. The production method according to claim 7 or 8, wherein a wavelength of the laser is 500 nm to 1500 nm.

10. An electromagnetic wave control member comprising:
the conductive film-attached substrate according to any one of claims 1 to 6.

11. A radio wave absorber member comprising:
the conductive film-attached substrate according to any one of claims 1 to 6.

12. A frequency selective surface comprising:
the conductive film-attached substrate according to any one of claims 1 to 6.
